# FASCICULE DE BREVET EUROPEEN

(11) **EP 2 049 931 B1**
(45) Date de publication et mention de la délivrance du brevet: **17.04.2013**
(21) Numéro de dépôt: 07787784.3
(22) Date de dépôt: 20.07.2007
(51) Int. Cl.: G02B 6/44

(54) **ÉLÉMENT DE CABLE OPTIQUE AUTO RENFORCÉ ET SON PROCÉDÉ DE FABRICATION**
SELBSTVERSTÄRKENDES OPTISCHES KABELELEMENT UND SEIN HERSTELLUNGSVERFAHREN
SELF-REINFORCING OPTICAL CABLE ELEMENT AND ITS MANUFACTURING PROCESS

(30) Priorité: 21.07.2006 FR 0606678
(43) Date de publication de la demande: 22.04.2009
(73) Titulaire: ACOME Société coopérative et participative Société anonyme coopérative de production à capital variable, 75014 Paris (FR)
(72) Inventeur: LESUEUR, Philippe, 22560 Trebeurden (FR); LEPLE, Christophe, 50300 Saint Senier / Avranches (FR); POULAIN, Arnaud, 50540 Les Biards (FR); LAGREVE, Christian, 61100 La Chapelle Biche (FR)
(74) Mandataire: Regimbeau
(86) Numéro de dépôt international: PCT/EP2007/057536
(87) Numéro de publication internationale: WO 2008/009749

(56) Documents cités:
- EP-A- 0 886 154
- EP-A2- 0 945 479
- WO-A-2005/019894
- US-A1- 2006 159 407

## Description

La présente invention concerne le domaine des câbles à fibres optiques et notamment des câbles optiques destinés aux réseaux de distribution d'abonnés.

Le brevet EP-0 157 610 décrit une structure à fibres optiques destinée à être installée dans une conduite par soufflage.

Cette structure comprend deux gaines, une gaine intérieure en polypropylène et une gaine extérieure en polyéthylène expansé.

La gaine intérieure présente un module d'élasticité supérieur à celui de la gaine extérieure et elle maintient les fibres optiques verrouillées dans une matrice fixe.

Cette structure permet d'augmenter la résistance au flambage, c'est-à-dire la compression longitudinale.

Cependant, elle présente l'inconvénient d'augmenter l'atténuation des fibres optiques, du fait de la contrainte engendrée par le verrouillage des fibres optiques par la gaine intérieure.

De plus, compte tenu du coefficient de dilatation du polypropylène (environ 10⁻⁴), cette atténuation sera d'autant plus importante lors des variations de température.

Enfin, du fait du verrouillage qu'elle assure et aussi de sa faible épaisseur, l'enlèvement de la gaine intérieure n'est pas aisé, ce qui rend difficile l'accès aux fibres.

Ces inconvénients ont été en partie surmontés par la structure à fibres optiques décrite dans le brevet EP-0 382 144.

Cette structure comporte des fibres optiques et au moins un fil de déchirement qui sont entourés par une gaine intérieure présentant un module d'élasticité important.

Cette gaine intérieure est elle-même entourée d'une gaine extérieure réalisée en une résine expansée.

La gaine intérieure est appliquée par extrusion et peut notamment être constituée de nylon, dont le coefficient de dilatation est d'environ 8.10⁻⁵.

Cette structure présente également de nombreux inconvénients.

En effet, même si le matériau constitutif de la gaine intérieure présente une fluidité suffisamment importante pour réduire les contraintes lors de l'extrusion, les pertes en atténuation des fibres optiques ne sont pas éliminées.

Le document EP-0 382 144 les mesure à 0,09 dB/Km à 1,3µm entre la température ambiante et une température de -20° C. Ces pertes sont principalement dues au coefficient de dilatation du nylon.

Par ailleurs, le problème de l'accessibilité aux fibres n'est pas résolu par la présence d'un fil de déchirement. En effet, celui-ci présente un diamètre au moins égal au diamètre d'une fibre optique, ce qui ne facilite pas l'accès à ce fil de déchirement, et peut ensuite créer des problèmes d'endommagement des fibres optiques lors du déchirement de la gaine si le fil de déchirement s'emmêle avec ces dernières.

De nombreux documents décrivent des structures de câbles incluant deux gaines et dont, au contraire des deux précédents, la gaine intérieure présente un module d'élasticité inférieur à celui de la couche externe. Ceci permet de découpler les fibres des sollicitations mécaniques liées à la fois à la fabrication du câble et à l'environnement extérieur.

Comme indiqué précédemment, l'utilisation du module d'élasticité des fibres optiques pour augmenter la raideur d'un microcâble entraîne des problèmes d'atténuation et d'accès aux fibres qui n'ont pas été résolus par les solutions connues.

Une autre génération de microcâble est apparue pour pallier ces problèmes et répondre aux exigences de performances en termes de frottement et rigidité imposées par la technique du soufflage-portage. Les documents FR-2 849 929, EP-0 646 818 ou EP-0 296 836 sont représentatifs de cette génération de microcâbles. Ils préconisent l'utilisation d'une couche interne, au contact des fibres, possédant un très bas module. Cette couche permet de désolidariser les fibres des sollicitations mécaniques et thermiques extérieures. Elle agit comme un tampon. La couche externe est alors réalisée de façon à apporter un bas coefficient de frottement et une certaine rigidité au câble, tout en conservant sa compacité. Ces câbles sont particulièrement adaptés au soufflage-portage, car leur rigidité est suffisante pour les pousser sur quelques dizaines de mètres et leur frottement faible garantit leur installation sur de grandes longueurs.

En ce sens, ils répondent mieux aux exigences du soufflage que les brevets précédents.

Les brevets EP-0 296 836 et FR-2 849 929 sont similaires et revendiquent notamment une couche externe à faible frottement. Le document PIRELLI décrit notamment l'utilisation de billes de verre réduisant le coefficient de frottement entre la conduite et le microcâble.

La publication WO-A1-2005/019894 décrit une structure de micro-cable à fibres optiques adapté à une technique de pose par poussage-tirage dans une micro-conduite.

Ces microcâbles présentent néanmoins l'inconvénient de conserver une rigidité relativement faible pour des applications de poussage pur, d'être fragiles en écrasement et choc, d'où la nécessité de les protéger par un tube.

Dans tous les cas, les structures de fibres optiques décrites dans l'état de la technique et conçues pour être installées par soufflage, présentent, comme inconvénient majeur, leur coût de réalisation. Ce dernier est dû à la nécessité de réaliser des couches successives de matériau présentant des propriétés mécaniques différentes.

On constate de surcroît que les matériaux classiquement utilisés dans la fabrication de modules de fibres optiques facilement déchirables, présentent un module d'élasticité relativement bas. De ce fait, les modules optiques obtenus ne présentent pas de résistance à l'écrasement, ni de rigidité suffisantes.

C'est notamment le cas des polyoléfines chargées ou des PVC souples.

L'état de la technique révèle donc une incompatibilité entre résistance à l'écrasement et rigidité, d'une part et déchirabilité, d'autre part.

La présente invention a pour objet de pallier ces inconvénients en proposant un élément de câble à fibres optiques qui puisse résister à l'écrasement, pratiquement éliminer les pertes en atténuation des fibres optiques, permettre un accès aisé à ces fibres optiques, tout en simplifiant considérablement le procédé de fabrication de façon à réduire le coût d'un tel élément de câble optique.

L'invention a également pour objet un câble optique comprenant plusieurs éléments de câble selon l'invention ainsi qu'à un procédé d'obtention d'un tel élément de câble optique.

Ainsi, l'invention concerne un élément de câble optique autorenforcé selon la revendication 1, comprenant une gaine entourant au moins une fibre optique, cette gaine étant réalisée en un matériau thermoplastique dont le module d'élasticité est supérieur à 3 GPa et dont le coefficient de dilatation thermique est inférieur à 10⁻⁵/°C, ladite gaine n'adhérant pas à ladite au moins une fibre optique dont elle est facilement séparable longitudinalement, afin de permettre un accès aisé à ladite au moins une fibre optique.

Cette gaine présente l'avantage de pouvoir être facilement fendue, sans que l'épaisseur soit un facteur limitant la facilité d'accès aux fibres. Toutefois, pour des questions de fragilité et de contribution mécanique, cette épaisseur ne sera jamais inférieure à 0,1mm.

Cet élément de câble présente donc l'avantage d'être à la fois autorenforcé, ce qui lui permet de résister à l'écrasement et d'être suffisamment rigide et facilement déchirable, ce qui rend aisé l'accès aux fibres optiques.

Ce matériau thermoplastique est un alliage LCP-polyester, ce polyester étant du PBT (polybutyltéréphtalate) ou un alliage LCP-PBT-PC(PolyCarbonate).

Cet élément de câble peut avantageusement comporter un produit d'étanchéité destiné à remplir les interstices entre les fibres optiques.

Ce produit d'étanchéité présentera avantageusement une épaisseur inférieure à 0,05 mm entre la gaine et lesdites fibres optiques.

L'élément de câble selon l'invention peut également comporter une couche supplémentaire sur ladite gaine, cette couche étant formée d'un matériau destiné à améliorer les performances de l'élément de câble en termes de coefficient de frottement. Ce matériau peut notamment consister en du PEHD ou en un matériau à base de PBT et de PC, tel que décrit dans le document FR-2 857 641.

Par ailleurs, il peut être utilisé seul ou en association avec d'autres éléments du même type. Dans ce cas, tous ces éléments de câble étant déjà auto-renforcés, l'enveloppe extérieure qui les entoure ne comporte pas nécessairement de structure renforcée.

Ceci permet de disposer d'un câble optique comportant un nombre important de fibres optiques, sans nécessiter de structure renforcée, ce qui simplifie la fabrication et réduit le coût d'obtention de ce câble.

L'invention a également pour objet un procédé de fabrication d'un élément de câble conforme à l'invention comprenant donc une gaine entourant au moins une fibre optique.

Ce procédé selon la revendication 7 consiste à former cette gaine sur une fibre optique ou un faisceau de fibres optiques par extrusion en compression d'un matériau thermoplastique dont le module d'élasticité est supérieur à 3GPa, dont la viscosité est comprise entre 10 et 100Pas pour des cisaillements allant jusqu'à 10 000/s dans l'intervalle de température compris entre 250 et 290°C, et ayant un post-retrait de 0,1%, de telle sorte que le matériau se répartit sur la surface extérieure de ladite au moins une fibre optique sans y adhérer et se solidifie autour de ladite au moins une fibre optique, sans générer de pression ni de contrainte.

Ce matériau thermoplastique est un alliage LCP-polyester, ce polyester étant du PBT (polybutyltéréphtalate) ou un alliage LCP-PBT-PC (PolyCarbonate).

Dans une forme particulière de réalisation, le procédé comporte une étape préalable consistant à introduire un produit d'étanchéité qui vient remplir les interstices entre les fibres optiques. Ce produit d'étanchéité n'altère en rien les caractéristiques de l'élément de câble et, s'il est présent entre la gaine et les fibres optiques, il présentera avantageusement une épaisseur inférieure à 0,05mm.

Une étape ultérieure consiste à former, sur ladite gaine, une couche supplémentaire d'un matériau améliorant les performances en termes de coefficient de frottement.

L'invention sera mieux comprise et d'autres buts, avantages et caractéristiques de celle-ci apparaîtront plus clairement à la lecture de la description qui suit et qui est faite au regard des figures annexées sur lesquelles :
- la figure 1 représente schématiquement et en coupe transversale, un exemple d'élément de câble selon l'invention,
- la figure 2 est une photographie illustrant la notion de séparabilité longitudinale de la gaine de l'élément de câble selon l'invention.

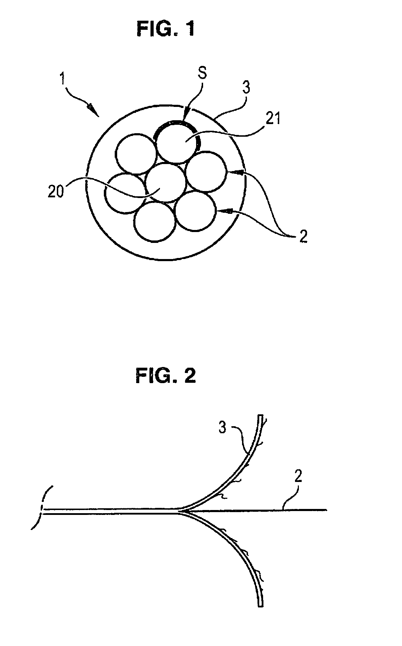

La figure 1 illustre un élément de câble 1 selon l'invention, comportant sept fibres optiques référencées 2.

Cet élément de câble est obtenu en formant une gaine 3 sur les fibres optiques par extrusion en compression d'un matériau thermoplastique particulier.

Ce matériau est un polymère à cristaux liquides qui présente une viscosité comprise entre 10 et 100Pas pour des cisaillements allant jusqu'à 10 000/s dans un intervalle de température compris entre 250 et 290°C. Il s'agit donc d'un matériau peu visqueux au moment de l'extrusion.

Cette viscosité lui permet de se répartir sur le pourtour des fibres et de cristalliser ou de solidifier rapidement au contact des fibres en épousant leur contour sans nécessiter de pression d'extrusion excessive qui pourrait générer des contraintes sur les fibres optiques.

On comprend que lorsque l'élément de câble optique ne comporte qu'une seule fibre optique, le matériau constituant la gaine 3 entoure complètement la fibre optique. Cependant, lorsque cet élément de câble comporte plusieurs fibres optiques, comme illustré sur la figure 1, le matériau n'enrobe que partiellement les fibres optiques et peut également ne pas du tout venir en contact de certaines fibres optiques, comme celle référencée 20 qui se situe au centre du faisceau de fibres optiques.

La faible viscosité du matériau lui permet de venir épouser la forme extérieure de l'assemblage que celui-ci ne comprenne que des fibres optiques ou des fibres optiques et un matériau d'étanchéité.

Cependant, on constate que le matériau ne pénètre pratiquement pas à l'intérieur du faisceau de fibres optiques du fait de la rapidité du matériau à se solidifier, ce qui rend ultérieurement la gaine facilement séparable longitudinalement.

Par ailleurs, ce matériau ne crée pas de contraintes excessives lors de la phase de refroidissement après le passage en tête d'extrusion, dans la mesure où il présente un post-retrait très faible, typiquement inférieur à 0,1%.

Une explication peut être avancée en ce qui concerne la faiblesse des contraintes qui sont générées sur les fibres optiques de l'élément de câble selon l'invention.

Si l'on s'intéresse par exemple à la fibre optique 21 qui est située à la périphérie du faisceau de fibres, on constate que la surface de contact entre la fibre optique 21 et la gaine 3, matérialisée par le trait épais référencé S, est relativement importante puisqu'elle représente plus de la moitié de la surface extérieure de la fibre.

On comprend que, dans une autre structure de câble, telle que décrite dans le document EP-0 157 610, la gaine qui entoure le faisceau de fibres est une gaine fine, d'épaisseur constante. Elle est en pratique « tendue » sur le faisceau de fibres. Sa surface de contact avec les fibres optiques situées à la périphérie du faisceau de fibres est donc nécessairement inférieure à la surface S identifiée sur la figure 1.

On peut donc en déduire que, la gaine exerçant une certaine force sur le faisceau de fibres optiques, la pression qui en résulte sur les fibres est moins importante dans le cas de l'élément de 4 câble selon l'invention que pour la structure décrite par le document EP-0 157 610.

En effet, dans le cas de l'invention, cette force est répartie sur une surface plus importante et elle génère donc une pression moins importante sur les fibres optiques.

De surcroît, le matériau utilisé pour réaliser la gaine ne génère pas de pertes optiques étant donné que son coefficient de dilatation est inférieur à 10⁻⁵/°C, et typiquement d'environ 4.10⁻⁶/°C. Ce matériau est donc peu sensible aux différences de température.

Il permet d'éviter les pertes en cyclage thermique, typiquement caractérisé par des variations de températures par paliers entre -30°C + 60°C par exemple et dans le temps.

On constate par ailleurs qu'après extrusion, la gaine n'adhère pas aux fibres optiques.

Au contraire, on constate que se crée une peau superficielle lorsque le matériau solidifie, ce qui facilite le décollement de la gaine par rapport aux fibres.

L'élément de câble obtenu présente un module d'élasticité élevé qui est supérieur à 3GPa et qui peut même être de l'ordre de 10GPa. Le module ne dépend pas de l'épaisseur. Par contre, la rigidité de l'élément peut être améliorée par une épaisseur plus importante de la gaine.

Il convient ici de préciser que le module d'élasticité dont il est question dans la présente demande est le module d'élasticité longitudinal.

Ainsi, ce module d'élasticité important confère à l'élément de câble selon l'invention une résistante à l'écrasement qui facilite son assemblage dans des structures de câble innovantes et qui permet son utilisation directe en tant que câble optique, lequel peut alors être installé dans une conduite par poussage par exemple.

De nombreux essais ont été réalisés pour vérifier que la gaine était facilement séparable longitudinalement du faisceau de fibres.

En pratique, la gaine se sépare facilement des fibres optiques car elle se déchire sous l'influence de fibres qui sont présentes longitudinalement à l'intérieur de la gaine.

Dans la mesure où cette dernière n'adhère pas aux fibres optiques, la fissure de la gaine, obtenue sans outil, se propage de manière rectiligne sur une longueur importante de l'élément de câble optique selon l'invention.

Les essais ont montré que la capacité de la gaine à être séparée longitudinalement des fibres était accentuée lorsque le matériau constitutif de la gaine était un alliage de polymères à cristaux liquides et de PBT

A cet égard, l'explication suivante est avancée. Un polymère à cristaux liquides présente un aspect fibreux qui permet un déchirement longitudinal. Cependant, on constate que les fibres sont intimement liées entre elles, ce qui peut dans certains cas gêner l'ouverture de la gaine sur une grande longueur. En effet, une des deux parties de la gaine ouverte a souvent tendance à s'amincir.

Cet inconvénient disparaît presque totalement lorsque le matériau est un alliage LCP-PBT, car dans ce cas, les fibres du matériau sont noyées dans une matrice.

En effet, le matériau en alliage LCP-PBT venant au contact de la fibre n'adhère pas à celle-ci. Il se crée notamment une peau superficielle lorsque le matériau fige ce qui facilite le décollement de la gaine par rapport aux fibres.

La figure 2 est une photographie d'un élément de câble optique où l'on a séparé longitudinalement la gaine pour accéder aisément aux fibres.

C'est l'aspect fibreux des alliages LCP-PBT qui permet de séparer longitudinalement la gaine en deux parties sans utiliser un outil spécifique.

De surcroît, l'utilisation d'un alliage du type LCP-PBT permet de réaliser une économie importante en termes de coût par rapport à l'utilisation de LCP pur.

Ils permettent également d'utiliser des vitesses d'extrusion plus élevées qu'avec du LCP pur, ce qui réduit le coût de fabrication des éléments de câble optique selon l'invention.

Ainsi, l'élément de câble selon l'invention ne nécessite qu'une seule étape de fabrication, tout en présentant une résistance à l'écrasement qui lui permet d'être utilisé en tant que tel, sans qu'il soit nécessaire d'y adjoindre une gaine ou une structure renforcée complémentaire.

Le coût de fabrication en est donc notablement réduit et ce, d'autant plus parce qu'on utilise, comme matériau constitutif de la gaine, un alliage LCP-PBT.

L'élément de câble optique obtenu est d'une grande compacité, qualité que cherchent systématiquement à obtenir tant les fabricants de câbles que les installateurs.

Enfin, l'accès aux fibres optiques est rendu extrêmement facile, puisqu'il suffit de déchirer - sur plusieurs mètres - la gaine de l'élément de câble optique à la main sans qu'aucun outil ne soit nécessaire.

Dans certains cas, il peut être opportun d'ajouter une étape de fabrication complémentaire.

On peut envisager d'introduire un produit d'étanchéité sur les fibres optiques, avant la réalisation de la gaine par extrusion en compression.

Ce produit d'étanchéité ne gêne en rien l'extrusion du LCP sur les fibres optiques. Les fibres optiques sont enduites de ce produit avant l'extrusion du LCP, et son objectif de remplir tous les interstices compris entre les fibres optiques.

De même, pour certaines applications, il peut être prévu de réaliser une étape complémentaire après formation de la gaine.

Il s'agit alors de former une gaine d'un matériau destiné à améliorer les performances de l'élément de câble optique en termes de coefficient de frottement. Ce matériau peut notamment consister en du PEHD ou en un matériau à base de PBT et de PC tel que décrit dans le document FR-2857641.

Bien entendu, l'élément de câble selon l'invention n'est pas limité à l'exemple illustré à la figure 1. Il pourrait ne comporter qu'une seule fibre optique, auquel cas la gaine entourerait complètement l'unique fibre optique. Il pourrait également comporter un nombre différent de fibres optiques.

## Revendications

1. Elément de câble optique autorenforcé comprenant une gaine (3) entourant au moins une fibre optique (2, 20, 21), **caractérisé en ce que** la gaine (3) est réalisée en un matériau comprenant un alliage de polymères à cristaux liquides LCP et de polybutyltéréphtalate PBT, dont le module d'élasticité longitudinal est supérieur à 3GPa, dont le coefficient de dilatation thermique est inférieur à 10⁻⁵/°C et qui présente une viscosité entre 10 et 100 Pas pour des cisaillements inférieurs ou égaux à 10 000/s dans un intervalle de température compris entre 250 et 290°C, ladite gaine (3) étant répartie sur le pourtour desdites fibres et épouse le contour des fibres sans adhérer aux fibres optiques dont elle est facilement séparable longitudinalement, afin de permettre un accès aisé aux fibres.

2. Elément de câble optique selon la revendication 1, dans lequel ladite gaine présente une épaisseur supérieure à 0,1 mm.

3. Elément de câble optique selon la revendication 1 ou 2, dans lequel le matériau constituant la gaine est un alliage LCP- PBT-PC (PolyCarbonate).

4. Elément de câble optique selon l'une des revendications précédentes, dans lequel le produit d'étanchéité présent entre lesdites fibres optiques et ladite gaine possède une épaisseur inférieure à 0,05 mm.

5. Elément de câble optique selon l'une des revendications 1 à 4 comportant, sur ladite gaine, une couche supplémentaire d'un matériau améliorant les performances de l'élément de câble en termes de coefficient de frottement.

6. Câble optique comprenant plusieurs éléments de câble selon l'une des revendications 1 à 5, ces éléments s'étendant dans une enveloppe extérieure dépourvue de structure renforcée.

7. Procédé de fabrication d'un élément de câble optique selon l'une des revendications 1 à 6, **caractérisé en ce qu'**il consiste à former une gaine sur une fibre optique ou sur un faisceau de fibres optiques par extrusion en compression d'un alliage de polymères à cristaux liquides LCP et de polybutyltéréphtalate PBT dont le module d'élasticité longitudinal est supérieur à 3GPa, dont la viscosité est comprise entre 10 et 100Pas pour des cisaillements allant jusqu'à 10 000/s pour une température comprise entre 250 et 290°C, dont le post-retrait est de 0,1 %, de telle sorte que le matériau se répartit sur la surface extérieure de ladite fibre optique ou dudit faisceau de fibres optiques sans y adhérer et se solidifie autour de ladite fibre optique ou dudit faisceau de fibres optiques, sans générer de pression ni de contrainte.

8. Procédé selon la revendication 7, dans lequel le matériau constituant la gaine est un alliage LCP-PBT-PC (PolyCarbonate).

9. Procédé selon l'une des revendications 7 à 8, comportant une étape préalable consistant à introduire un produit d'étanchéité qui vient remplir les interstices entre les fibres optiques.

10. Procédé selon la revendication 9, dans lequel le produit d'étanchéité présent entre les fibres optiques ét la gaine présente une épaisseur inférieure à 0,05mm.

11. Procédé selon l'une des revendications 7 à 10, comportant une étape ultérieure consistant à former, sur ladite gaine, une couche supplémentaire d'un matériau améliorant les performances en termes de coefficient de frottement.

## Claims

1. Self-reinforcing optical cable element comprising a sheath (3) surrounding at least one optical fibre (2, 20, 21), **characterized in that** the sheath (3) is made in a material comprising an alloy of liquid crystal polymers LCP and polybutylterephthalate PBT, whose longitudinal elasticity modulus is higher than 3GPa, whose coefficient of thermal expansion is lower than 10⁻⁵/°C and which has a viscosity between 10 and 100 Pas for shear values of 10,000/s or less over a temperature range of between 250 and 290°C, the said sheath (3) being distributed over the surround of the said fibres and follows the contour of the fibres without adhering to the optical fibres from which it can easily be separated longitudinally to provide easy access to the fibres.

2. An optical cable element according to claim 1 wherein the said sheath has a thickness of more than 0.1 mm.

3. An optical cable element according to claim 1 or 2 wherein the constituent material of the sheath is an LCP-PBT-PC (PolyCarbonate) alloy.

4. An optical cable element according to one of the preceding claims wherein the sealing product present between said optical fibres and the said sheath has a thickness of less than 0.05 mm.

5. An optical cable element according to one of claims 1 to 4 comprising, on said sheath, an additional layer of material to improve the performance of the cable element in terms of coefficient of friction.

6. An optical cable comprising several cable elements according to one of claims 1 to 5, these elements extending in an outer jacket devoid of reinforced structure.

7. A process for manufacturing an optical cable element according to one of claims 1 to 6, **characterized in that** it consists of forming a sheath on an optical fibre or bundle of optical fibres by compression extrusion of an alloy of liquid crystal polymers LCP and polybutylterephthalate PBT whose longitudinal elasticity modulus is higher than 3GPa, whose viscosity is between 10 and 100 Pas for shear values of up to 10,000/s over a temperature ranging from 250 to 290°C, whose post-shrinkage is 0.1% so that the material is distributed over the outer surface of the said optical fibre or the said bundle of optical fibres without adhering thereto, and solidifies around the said optical fibre or the said bundle of optical fibres without generating either pressure or stress.

8. The process according to claim 7 wherein the constituent material of the sheath is an LCP-PBT-PC (PolyCarbonate) alloy.

9. The process according to one of claims 7 to 8 comprising a prior step whereby a sealing product is added which fills the interstices between the optical fibres.

10. The process according to claim 9 wherein the sealing product that is present between the optical fibres and the sheath has a thickness of less than 0.05 mm.

11. The process according to one of claims 7 to 10 comprising a subsequent step consisting of forming on the said sheath an additional layer of a material improving performance in terms of coefficient of friction.

## Patentansprüche

1. Selbstverstärkendes Glasfaserkabelelement, das einen Mantel (3) umfasst, der mindestens eine Glasfaser (2, 20, 21) umgibt, **dadurch gekennzeichnet, dass** der Mantel (3) aus einem Material hergestellt ist, das eine Mischung aus Flüssigkristallpolymeren FKP und Polybutylterephthalat PBT enthält, deren Längselastizitätsmodul größer als 3 GPa ist, deren Wärmeausdehnungskoeffizient unter 10⁻⁵/°C liegt und die eine Viskosität zwischen 10 und 100 Pa.s bei einer Schergeschwindigkeit von unter oder gleich 10 000/s in einem Temperaturintervall zwischen 250 und 290°C aufweist, wobei der Mantel (3) um den Umfang der Fasern verteilt ist und sich an die Kontur der Fasern anpasst, ohne an den Glasfasern zu haften, von denen er in Längsrichtung leicht trennbar ist, damit die Fasern leicht erreichbar sind.

2. Glasfaserkabelelement nach Anspruch 1, wobei der Mantel eine Stärke von über 0,1 mm aufweist.

3. Glasfaserkabelelement nach Anspruch 1 oder 2, wobei das Material, aus dem der Mantel besteht, eine Mischung FKP-PBT-PC (Polycarbonat) ist.

4. Glasfaserkabelelement nach einem der vorhergehenden Ansprüche, wobei das Dichtungsprodukt, das zwischen den Glasfasern und dem Mantel vorhanden ist, eine Stärke von unter 0,05 mm aufweist.

5. Glasfaserkabelelement nach einem der Ansprüche 1 bis 4, das auf dem Mantel eine zusätzliche Schicht aus einem Material aufweist, das die Eigenschaften des Kabelelements hinsichtlich des Reibungskoeffizienten verbessert.

6. Glasfaserkabel, das mehrere Kabelelemente nach einem der Ansprüche 1 bis 5 umfasst, wobei diese Elemente in einer äußeren Umhüllung ohne verstärkte Struktur verlaufen.

7. Verfahren zur Herstellung eines Glasfaserkabelelements nach einem der Ansprüche 1 bis 6, **dadurch gekennzeichnet, dass** es darin besteht, einen Mantel auf einer Glasfaser oder auf einem Glasfaserbündel unter Druck durch Extrudieren einer Mischung aus Flüssigkristallpolymeren FKP und Polybutylterephthalat PBT zu bilden, deren Längselastizitätsmodul größer als 3 GPa ist, deren Viskosität zwischen 10 und 100 Pa·s bei einer Schergeschwindigkeit von bis zu 10 000/s bei einer Temperatur zwischen 250 und 290°C liegt, deren Nachschwindung 0,1 % beträgt, sodass sich das Material auf der Außenfläche der Glasfaser oder des Glasfaserbündels verteilt, ohne daran zu haften, und um die Glasfaser oder das Glasfaserbündel herum fest wird, ohne Druck oder Spannung zu erzeugen.

8. Verfahren nach Anspruch 7, wobei das Material, aus dem der Mantel besteht, eine Mischung FKP-PBT-PC (Polycarbonat) ist.

9. Verfahren nach einem der Ansprüche 7 bis 8, das einen vorangehenden Schritt umfasst, der darin besteht, ein Dichtungsprodukt einzubringen, das die Zwischenräume zwischen den Glasfasern füllt.

10. Verfahren nach Anspruch 9, wobei das Dichtungsprodukt, das zwischen den Glasfasern und dem Mantel vorhanden ist, eine Stärke von unter 0,05 mm aufweist.

11. Verfahren nach einem der Ansprüche 7 bis 10, das einen späteren Schritt umfasst, der darin besteht, auf dem Mantel eine zusätzliche Schicht aus einem Material zu bilden, das die Eigenschaften hinsichtlich des Reibungskoeffizienten verbessert.
